# EUROPEAN PATENT APPLICATION

(11) **EP 4 604 655 A1**
(43) Date of publication of application: **20.08.2025**
(21) Application number: 25158604.6
(22) Date of filing: 18.02.2025
(51) Int. Cl.: H04W 74/00, H04W 74/0833

(54) **METHOD AND APPARATUS FOR PERFORMING RANDOM ACCESS PROCEDURE IN SUB-BAND FULL DUPLEX**

(30) Priority: 19.02.2024 KR 20240023843; 03.02.2025 KR 20250012955
(71) Applicant: KT Corporation, Seongnam-si, Gyeonggi-do 13606 (KR)
(72) Inventor: LEE, Eun-Jong, 13606 Seongnam-si, Gyeonggi-do (KR); PARK, Kyujin, 13606 Seongnam-si, Gyeonggi-do (KR)
(74) Representative: BCKIP Part mbB

(57) **Abstract**

Provided are a method and apparatus for performing a random access procedure in a wireless communication. The method of UE may include receiving first random access channel (RACH) resource configuration information associated with a subband full duplex (SBFD) and second RACH resource configuration information associated with non-SBFD from a base station, selecting one of a first RACH resource according to the first RACH resource configuration information and a second RACH resource according to the second RACH resource configuration information, and transmitting a preamble corresponding to the selected one of the first RACH resource and second RACH resource to the base station.

## Description

### CROSS-REFERENCE TO RELATED THE APPLICATION

This application is based on and claims priority to Patent Application No. 10-2024-0023843 filed on Feb. 19, 2024 and No. 10-2025-0012955 filed on Feb. 3, 2025 in the Korean Intellectual Property Office, the disclosures of which are incorporated by reference herein in their entirety.

### BACKGROUND

### Technical Field

The present disclosure relates to wireless communication applicable to 5G NR, 5G-Advanced and 6G.

### Description of the Related Art

With the increase in the number of communication devices, there is a corresponding rise in communication traffic that must be managed. To address this increased communication traffic, a next generation 5G system, which is an enhanced mobile broadband communication system compared to the exiting LTE system, has become essential. Such a next generation 5G system has been designed based on scenarios which are classified into Enhanced Mobile BroadBand (eMBB), Ultra-reliability and low-latency communication (URLLC), Massive Machine-Type Communications (mMTC), and others.

eMBB, URLLC, and mMTC represent next generation mobile communication scenarios. eMBB is characterized by high spectrum efficiency, high user experience data rate, and high peak data rate. URLLC is characterized by ultra-reliable, ultra-low latency, and ultra-high availability (e.g., vehicle-to-everything (V2X), Emergency Service, and Remote Control). mMTC is characterized by low cost, low energy consumption, short packets, and massive connectivity (e.g., Internet of Things (IoT)).

### SUMMARY

The disclosure provides a method and apparatus for efficiently performing a random access procedure subband full duplex (SBFD) communication.

According to an embodiment, a method of a user equipment (UE) for performing communication in a wireless communication system. The method may include receiving first random access channel (RACH) resource configuration information associated with a subband full duplex (SBFD) and second RACH resource configuration information associated with non-SBFD from a base station, selecting one of a first RACH resource according to the first RACH resource configuration information and a second RACH resource according to the second RACH resource configuration information, and transmitting a preamble corresponding to the selected one of the first RACH resource and the second RACH resource to the base station.

According to another embodiment, a method of a base station may be provided for performing communication in a wireless communication system. The method may include transmitting first random access channel (RACH) resource configuration information associated with a subband full duplex (SBFD) and second RACH resource configuration information associated with non-SBFD to a UE, and receiving a preamble corresponding to one of a first RACH resource according to the first RACH resource configuration information and a second RACH resource according to the second RACH resource configuration information from the UE.

In accordance with further another embodiment, a user equipment (UE) may be provided for performing communication in a wireless communication system. The UE may include at least one processor; and at least one memory configured to store instructions and operably electrically connectable to the at least one processor, wherein operations performed based on the instructions executed by the at least one processor include: receiving first random access channel (RACH) resource configuration information associated with a subband full duplex (SBFD) and second RACH resource configuration information associated with non-SBFD, selecting one of a first RACH resource according to the first RACH resource configuration information and a second RACH resource according to the second RACH resource configuration information, and transmitting a preamble corresponding to the selected one of the first RACH resource and the second RACH resource to the base station.

In accordance with still another embodiment, a base station may be provided for performing communication in a wireless communication system. The base station may include at least one processor; and at least one memory configured to store instructions and operably electrically connectable to the at least one processor, wherein operations performed based on the instructions executed by the at least one processor include: transmitting first random access channel (RACH) resource configuration information associated with a subband full duplex (SBFD) and second RACH resource configuration information associated with non-SBFD to a UE, and receiving a preamble corresponding to one of a first RACH resource according to the first RACH resource configuration information and a second RACH resource according to the second RACH resource configuration information from the UE.

Meanwhile, the base station may transmit first RACH resource configuration information to the UE through a system information block 1 (SIB 1), and the UE may receive the first RACH resource configuration information.

Further, the base station may transmit first mapping information between a first RACH occasion of the first RACH resource and a synchronization signal block (SSB), and the UE may receive the first mapping information, in which the first mapping information is separate from second mapping information between a second RACH occasion of the second RACH resource and the SSB.

Further, the base station may transmit an indicator indicating that the first RACH resource is prioritized over the second RACH resource to the UE, and the UE may receive the indicator. The UE may select the first RACH resource based on the indicator, and transmits a preamble to the base station, in which the preamble corresponds to the first RACH resource. Here, the indicator may be included in the first RACH resource configuration information. In addition, the indicator may be transmitted from the base station to the UE at the initiation of the RACH procedure.

### BRIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIGS. 7A and 7B show schematic examples of subband full duplex communication.
FIGS. 8A and 8B show examples where an uplink (UL) subband is configured in a downlink (DL) slot according to an embodiment of the present disclosure.
FIG. 9 is a flowchart illustrating a method of operating a terminal according to an embodiment of the disclosure.
FIGS. 10A and 10B show examples of the configurations for an SBFD RO and a non-SBFD RO according to an embodiment of the disclosure.
FIG. 11 shows a procedure between a UE and a base station according to an embodiment of the present disclosure.
FIG. 12 is a flowchart showing a method of operating a UE according to an embodiment of the disclosure.
FIG. 13 is a flowchart illustrating a method of operating a base station according to an embodiment of the disclosure.
FIG. 14 is a block diagram showing apparatuses according to an embodiment of the disclosure.
FIG. 15 is a block diagram showing a terminal (e.g., UE) according to an embodiment of the disclosure.
FIG. 16 is a block diagram of a processor in accordance with an embodiment.
FIG. 17 is a detailed block diagram of a transceiver of a first apparatus shown in FIG. 14 or a transceiving unit of an apparatus shown in FIG. 15.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

Abase station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

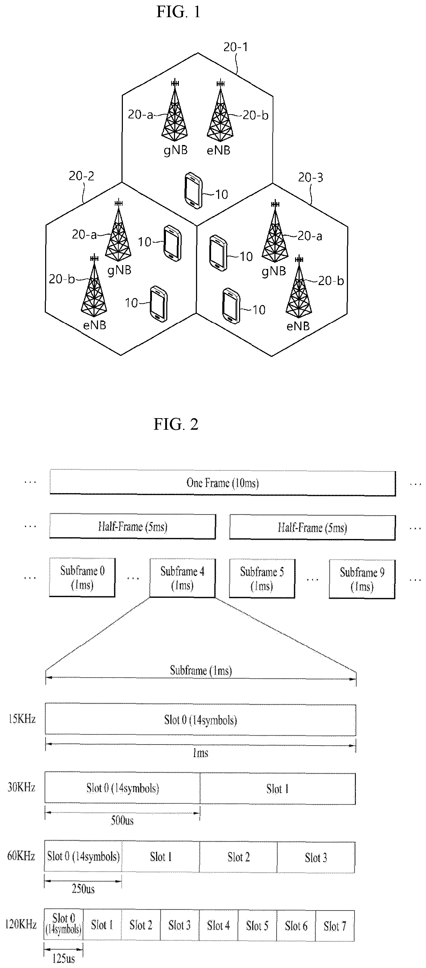

**FIG. 1** **is a diagram illustrating a wireless communication system**.

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

**FIG. 2** **is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{u}) | N^{slot}_{symb} | N^{rame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

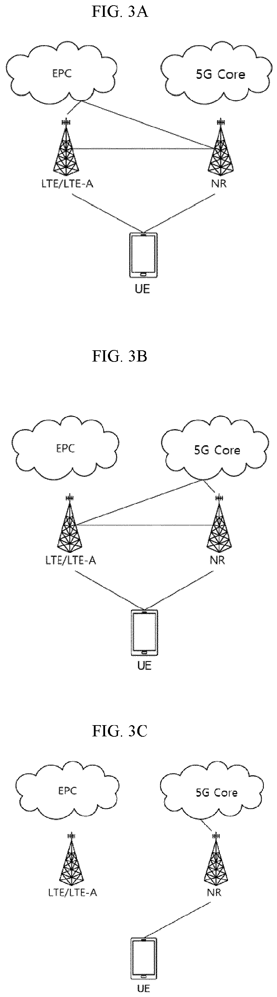

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

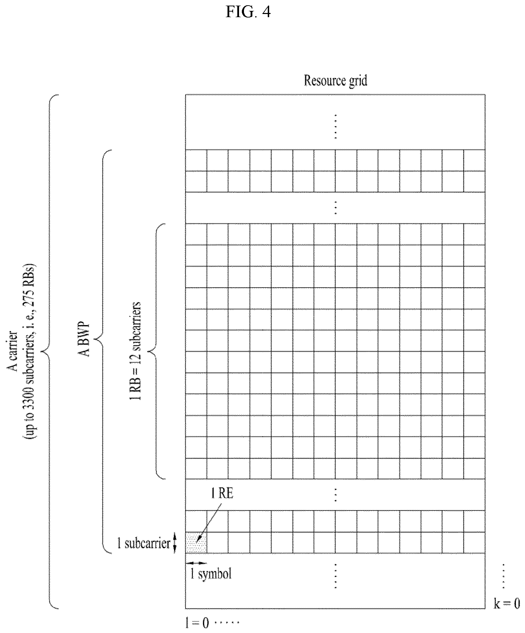

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

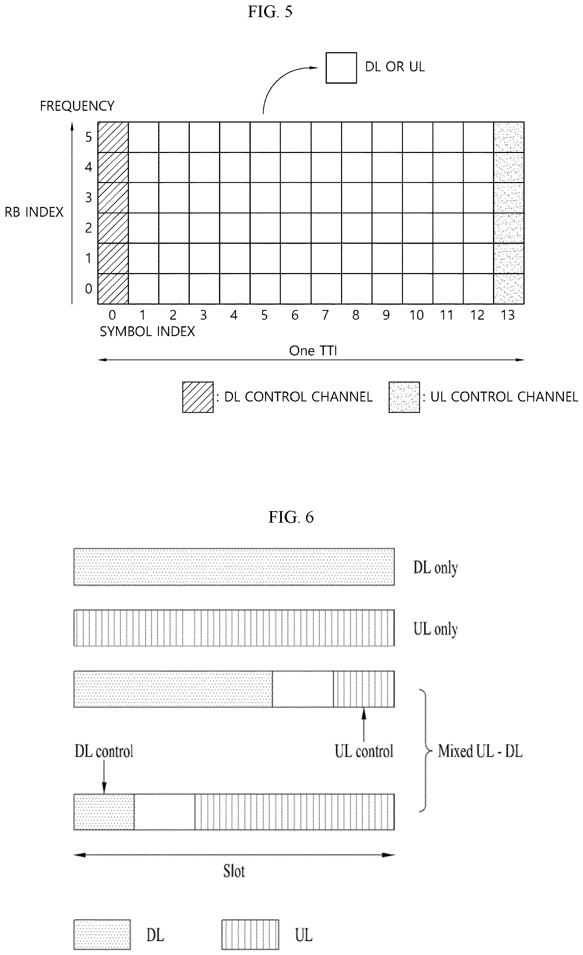

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.
1. DL only configuration
2. UL only configuration
3. Mixed UL-DL configuration
   - DL region + Guard Period (GP) + UL control region
   - DL control region + GP + UL region

   DL region: (i) DL data region, (ii) DL control region + DL data region
   UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

Time division duplex (TDD) refers to a duplexing method widely used in commercial NR, i.e., a 5G mobile communication system. In TDD, time-duration radio resources are divided into downlink slots and uplink slots, where the downlink slots are typically distributed in a higher percentage than the uplink slots based on the distribution ratio of uplink traffic and downlink traffic. However, such a limitation in the uplink slot distribution has negative effects in terms of coverage and delay time. Recently, full duplex communication has attracted attention as a technology to solve this problem.

The full duplex communication refers to a technology in which the gNB, i.e., the base station performs DL transmission and UL reception simultaneously through the same (or given) radio resources. The UE may also perform DL reception and UL transmission simultaneously. In other words, both the base station and the UE may support full duplex communication. However, unlike the base station in which self-interference cancelation is structurally more feasible, the UE exhibits DL reception performance that is susceptible to self-interference from a UL transmission signal. Therefore, it is generally considered preferable to operate the gNB in full duplex communication and operate the UE in half duplex communication. In addition, the gNB may also primarily consider a subband non-overlapping full duplex communication method in which it performs DL transmission and UL reception simultaneously, but uses different frequency resources for transmission and reception, rather than the same resources between the DL and UL to reduce the effects of self-interference.

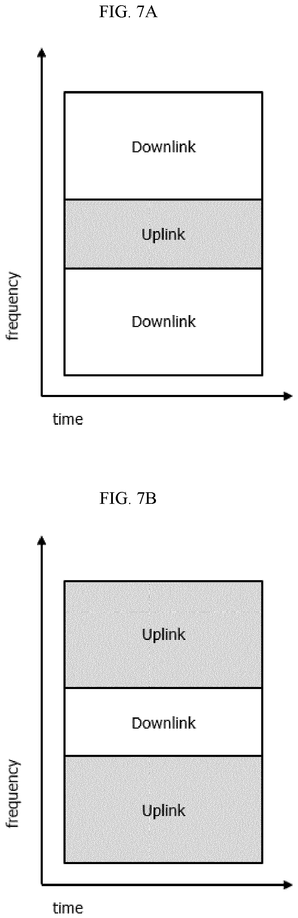

**FIGS. 7A and 7B** **show schematic examples of subband full duplex communication.**

The subband full duplex communication may be referred to as subband full duplex communication (SBFD) or full duplex communication subband (FDSB).

In SBFD, some time-frequency resources on a given carrier are used for the downlink, and some time-frequency resources on the same carrier are used for the uplink. Specifically, the downlink resources and the uplink resources are separated from each other in the frequency domain and used for transmission and reception.

FIGS. 7A and 7B show examples of SBFD. In the frequency domain, FIG. 7A shows an example where an uplink subband is located between downlink subbands, and FIG. 7B shows an example where the downlink subband is located between the uplink subbands. Although not shown in the drawings, a guard band or guard period may be located between the downlink subband and the uplink subband to reduce interference.

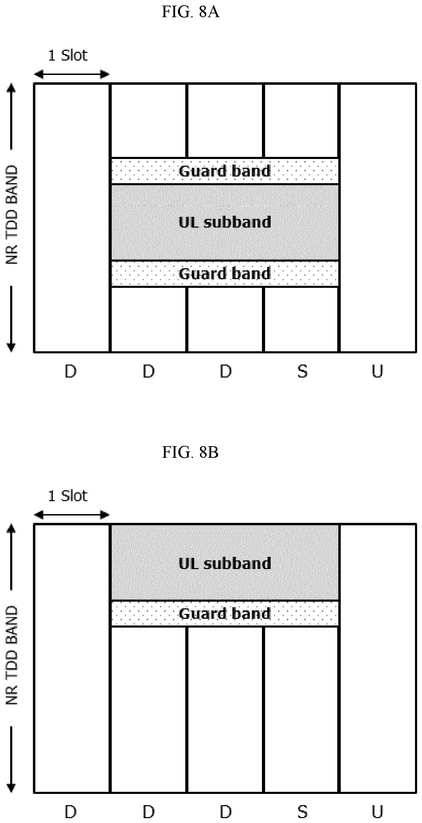

**FIGS. 8A and 8B** **show examples where an uplink (UL) subband is configured in a downlink (DL) slot according to an embodiment of the present specification.**

Referring to FIGS. 8A and 8B, if the TDD is configured at a ratio of 4:1 between DL slots and UL slots in any NR frequency band (where the last DL slot is a special slot of which some symbols include flexible symbols for DL/UL transition), the UL subband may be configured to support the UL transmission of the UE in some (or all) DL slots among the corresponding DL slots. When the UL subband is configured in any DL slot, the UL subband may be configured either at the center or at the edge of the corresponding frequency band as shown in FIGS. 8A and 8B, and a guard band may be configured between the UL subband and the DL subband in the corresponding slot.

Meanwhile, the remaining frequency resources, excluding the UL subband and the guard band, may be used as the DL subbands for the DL transmission and reception according to the existing slot/symbol configuration information. As shown in FIG. 8A, when the UL subband is configured at the center of the frequency band, a total of two guard bands, one at the top and one at the bottom, are configured around the corresponding UL subband, followed by a total of two DL subbands, one at the top and one at the bottom, are configured. Alternatively, as shown in FIG. 8B, when the UL subband is configured at the edge of the frequency band, one guard band and one DL subband may be configured adjacent to the corresponding UL subband.

In the existing NR, the UL-DL slots are defined to be configured in units of cells through cell-specific RRC signaling. In other words, the patterns of DL symbol, UL symbol, and flexible symbol having certain periods are configured through `tdd-UL-DL-ConfigurationCommon', i.e., the RRC message/information for the corresponding UL-DL slot configuration. In addition, only the flexible symbol configured through the 'tdd-UL-DL-ConfigurationCommon' may be reallocated to the UL symbol, DL symbol or flexible symbol through the UE-specific RRC signaling, i.e., 'tdd-UL-DL-ConfigurationDedicated'. Alternatively, a method of indicating a dynamic slot format through a UE-group common PDCCH has also been defined. To this end, the NR also supports a dynamic slot format indication method through DCI format 2_0.

According to the existing slot configuration method described above, any one symbol may be configured or indicated as the DL, UL or flexible symbol. For example, as shown in FIG. 8A, any slot format may be configured to DDDSU through the existing slot configuration. D refers to a downlink slot and means that all OFDM symbols constituting the corresponding slot are configured to DL. U refers to an uplink slot and means that all OFDM symbols constituting the corresponding slot are configured to UL. S refers to a special slot and means that flexible symbols for DL/UL transition are included in the corresponding slot. Generally, the corresponding special slot in the case of a normal CP may include a total of 14 symbols, i.e., 12 DL symbols and 2 flexible symbols. Alternatively, the special slot may include 10 DL symbols, 2 flexible symbols, and 2 UL symbols. That is, one symbol in any TDD carrier is configured or indicated as only one of the DL, UL, or flexible symbols.

However, as shown in FIGS. 8A and 8B, when the UL subband is configured in any DL slot, the DL transmission or UL transmission may occur simultaneously for each frequency resource in the corresponding symbol. In this way, the DL slot or symbol including the UL subband, or the UL slot or symbol including the DL subband will be referred to as an SBFD slot or SBFD symbol in this specification.

Further, in this specification, a slot including only the SBFD symbols will be referred to as the SBFD slot, and a slot including only the symbols based on the existing symbol configuration (i.e., a slot including only symbols excluding the UL subband, DL subband, and the guard band) will be referred to as a non-SBFD slot. Alternatively, a slot including at least one SBFD symbol may also be referred to as an SBFD slot.

Meanwhile, an idle/inactive UE in the current NR performs a random access procedure for the purpose of initial access. Information for this may be received through the "RACH-ConfigCommon information element (IE)" of the system information block 1 (SIB1). A cell that supports 2-step RACH includes "RACH-ConfigCommonTwoStepRA IE" to allow the UEs to perform the initial access through the 2-step RA procedure. The IE may refer to the standard specification TS 38.331.

If the base station supports the subband non-overlapping full duplex, it is considered to configure additional PRACH resources beyond the PRACH resources of the non-SBFD slot to transmit the PRACH preamble through the corresponding UL subband within the SBFD symbol or SBFD slot where the UL subband is configured as described above. This may not only increase the RACH resources of the UE but also help solve RACH delay issues that may occur in the TDD. However, the SBFD area is defined to utilize part of the typical DL resources. Therefore, it may be difficult to allocate the same amount of PRACH resources as the resources allocated in the non-SFBD area.

Because the UE selects the next available RACH Occasion (RO) at the moment of transmitting the PRACH preamble, the selected area may be either the SBFD resource or the non-SBFD resource. Therefore, it is necessary to define a method of efficiently using the PRACH resources belonging to two different areas.

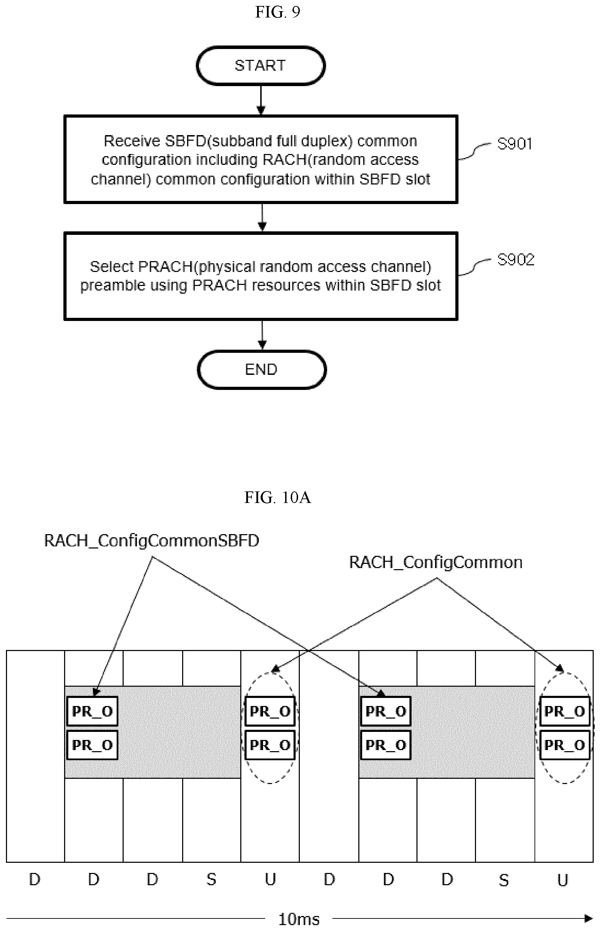

FIG. 9 is a flowchart illustrating a method of operating a terminal (e.g., user equipment: UE) according to an embodiment of the disclosure.

In this specification, when both the PRACH resources are allocated to the SBFD slot and to the non-SBFD slot, a method for allowing the UE to efficiently select the PRACH resource, and a corresponding RACH procedure are defined. More specifically, a method is proposed for defining the "SBFD common RACH resource" allocated to the SBFD slot through the SIB, and a method for selectively using a preamble index belonging to either the RA resources in the SBFD slot or the RA resource in the non-SBFD slot.

Further, in this specification, as a method to enable even the initial access UE to use the SBFD resources, "SBFD common configuration" information is defined through the system information (SIB), allowing the UE to receive PRACH resource information in the corresponding configuration along with the "SBFD common configuration" information included in the SIB. Here, the SIB containing the "SBFD common configuration" information is preferably the SIB 1, and the PRACH resources in the corresponding SBFD slot need to additionally include mapping information with the SSB(s) swept within the cell for the beam mapping of the UE, using the same method as the existing method. That is, this means that the PRACH resource information for each SSB in the SBFD needs to be defined separately from the PRACH resource for each SSB in the non-SBFD slot.

Referring to FIG. 9, the UE receives an SBFD common configuration including a random access channel (RACH) common configuration within an SBFD slot from the base station (S901). Here, the SBFD common configuration may be received through the SIB 1. Then, the UE selects a PRACH preamble for contention based random access (CBRA) using the PRACH resources within the SBFD slot (S902) and transmits it to the base station.

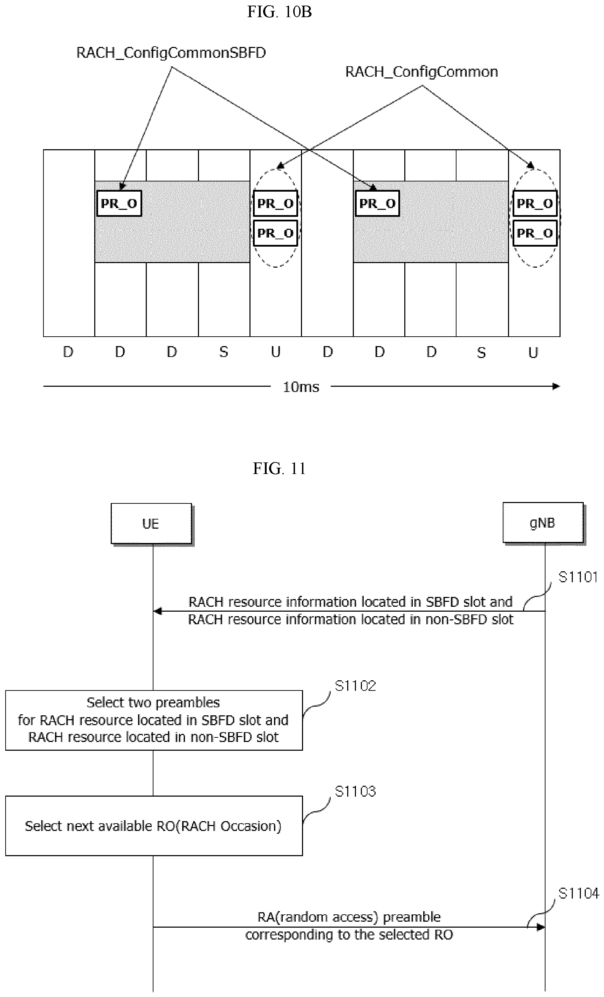

FIGS. 10A and 10B show examples of the configurations for an SBFD RO and a non-SBFD RO according to an embodiment of the disclosure.

The system information for the RACH resource configuration in the SBFD resources may be defined by a new IE that is distinct from RACH_ConfigGeneric in RACH ConfigCommon configured for legacy UEs. This allows the base station to configure the SBFD resource to support the initial access of the UE capable of using the SBFD resource and to enable CBRA operation of the PRACH resource within the SBFD slot. In other words, this means that the IE such as RACH ConfigCommonSBFD and RACH_ConfigGenericSBFD is newly defined for this purpose. The corresponding configuration needs to include the additional PRACH resource information beyond the PRACH resource of RACH ConfigCommon, and PRACH occasions for the corresponding PRACH resources need to have additional mapping information with the SSBs within the cell. That is, FIGS. 10A and 10B show the relationships between the PRACH occasions within the SBFD slot and the PRACH occasions within the non-SBFD slot, as proposed in this disclosure.

As shown in FIGS. 10A and 10B, the relationships between the RACH Occasion (RO) or PRACH Occasion (PR_O) within the SBFD slot and the RO within the non-SBFD slot may be defined by at least one of the following methods.

Scheme 1. The RO within the non-SBFD slot and the RACH resource configuration within an independent SBFD slot

When the RA procedure is initiated, it is first determined whether to perform RACH using the RO within the non-SBFD slot or to perform RACH using the RO in the SBFD slot, and only the RACH resources in the selected area are used for the ongoing RACH. Here, the RACH resource configuration according to the scheme 1 may be determined as implemented by the UE, or RA initiation in the SBFD area may be configured to be prioritized for the UEs capable of the SBFD by the instructions of the base station. This may be determined depending on the presence of RACH resources in the SBFD area of the SIB, or it may be indicated by including an explicit indicator in the RACH configuration information.

Scheme 2. The configuration of the RACH resources of the SBFD slot within the same association period as the RACH resources within the non-SBFD slot

When the RA procedure is initiated, the RACH may be started through the non-SBFD slot or a slot (the next available RO), which is located first among the SBFD slots. This means that RA retry is possible using RACH resources in different areas even while there is an ongoing RACH.

Scheme 2-1. The RACH resource within the SBFD slot configured to be the same as the RACH resource within the non-SBFD slot (FIG. 10A)

By configuring the same amount of RACH resources as that of the RACH resources configured for the non-SBFD, the same SSB mapping is performed for the RACH preamble index transmitted in different areas. That is, there is no uncertainty about the SSB mapping and RACH group (e.g., contention based random access (CBRA)/ contention free random access (CFRA)/GroupA/GroupB) even if the selected preamble index is transmitted to either the SBFD area or the non-SBFD area.

Scheme 2-2. The RACH resource within the SBFD slot configured to be different from the RACH resource within the non-SBFD slot (FIG. 10B)

By configuring a different amount of RACH resources from that of the RACH resources configured for the non-SBFD, different SSB mapping may occur for the RACH preamble index transmitted in different areas.

Scheme 2-2-1. Each time RA is attempted, one area (SBFD or non-SBFD) is first selected, the preamble index is then set for the selected area is set, and the RA preamble is transmitted to the next available RO of the selected area is selected.

Scheme 2-2-2. Two different preamble indices are selected for the respective area, and then an RA preamble for the area corresponding to the next available RO is transmitted.

In order for the UE to utilize both SBFD and non-SBFD RACH resources as in the scheme 2, the ROs within the SBFD slot are required to be defined in the same association period (0ms in FIGS. 10A and 10B) as that of the ROs within the non-SBFD slot. As shown in FIG. 10A, if the number of ROs within the SBFD slot is the same as the number of ROs within the non-SBFD slot, and the ROs within the non-SBFD slot are all located within the subband of the SBFD slot, the parameters related to the RACH resource information within the SBFD slot may be omitted. In this case, the UE may determine the SBFD slot to have the same ROs as the non-SBFD slot.

However, as shown in FIG. 10B, if the two areas are different in the number of ROs belonging to the same period, the ROs in the SBFD resources are required to have an SSB mapping rule (i.e., ssb-perRACH-OccasionAndCB-PreamblesPerSSB) independently of the ROs in non-SBFD resources. Here, the base station needs to set the association period between the RO and the SSB to be the same as the period for the non-SBFD, and the SSB mapping based on the RO needs to be defined considering this. In particular, if the number of ROs defined within the association period of the non-SBFD slot is less than the number of ROs within the same period of the SBFD slot, and "SSB to RO mapping (ssb-perRACH-OccasionAndCB-PreamblesPerSSB)" in the SBFD slot is greater than 2, the UE may have different preamble index areas between the two areas for the selected SSB. However, in the current RACH procedure, an associated preamble index is first selected for the selected Synchronization Signal Block (SSB)/Channel State Information-Reference Signal (CSI-RS), and the next available RO is then selected for this. Because the preamble index for the SBFD area and the preamble index for the non-SBFD area may be selected within different ranges, a new procedure for this needs to be defined (in other words, the specific procedure of the scheme 2-2 needs to be defined).

First, in the case of CFRA, the base station needs to allocate each of a dedicated preamble for the SBFD area and a dedicated preamble for the non-SBFD area to the UE. That is, when allocating the dedicated preamble, the base station needs to inform the UE of whether the CFRA resource is the resource for the SBFD area or the resource for the non-SBFD area by an indicator while receiving the corresponding CFRA resource associated with the SSB or CSI-RS. This may mean that the allocation is performed by an RRC or PDCCH order, and an additional indicator should be included in both cases (whether it is for the SBFD or the non-SBFD). If two CFRA resources for both the SBFD area and the non-SBFD area are allocated to the UE, this means that the UE first selects the area to which the next available RO belongs, and then performs the procedure after setting the CFRA preamble index corresponding to the selected area.

In the case of CBRA, it was previously described that the base station needs to transmit the RACH resource information for the SBFD area to the IE, such as the new RACH_ConfigCommonSBFD. The UE that receives the corresponding information along with RACH _ConfigCommon randomly selects the preamble for the CBRA associated with the selected SSB/CSI-RS for each of the two areas (SBFD and non-SBFD). The preamble is transmitted by setting only the preamble index of the area, to which the next available RO belongs, between the two selected preamble indices.

FIG. 11 is a signal diagram showing a procedure between a UE and a base station according to an embodiment of the disclosure.

Hereinafter, the operations of the UE will be described in detail with reference to FIG. 11.

The UE receives the RACH resource information belonging to the SBFD slot and the RACH resource information belonging to the non-SBFD slot from the base station (S1101). Based on the received information, the UE selects two preambles: one for the RACH resource located in the SBFD slot and one for the RACH resource located in the non-SBFD slot (S1102).

In the case of CFRA, the RACH resource information received from the base station may include the SSB/CSI-RS information and two preamble indexes for this information along with the indicator indicating that one is a preamble index for the SBFD slot and the other is a preamble index for the non-SBFD slot.

In the case of CBRA, two preamble indexes for the selected SSB/CSI-RS are selected. One is randomly selected from the preambles for the SBFD slots, and the other is randomly selected from the preambles for non-SBFD slots.

Then, the UE determines the next available RO (S1103) and sets the preamble for the slot, to which the determined RO belongs, as a preamble index. Then, the preamble corresponding to the determined RO is transmitted to the base station (S1104).

Hereinafter, the operations of the based station will be described in detail with reference to FIG. 11.

The base station transmits the RACH resource information belonging to the SBFD slot and the RACH resource information belonging to the non-SBFD slot to the UE (51101).

In the case of CFRA, the RACH resource information transmitted to the UE may include the SSB/CSI-RS information and two preamble indexes associated with this information, along with the indicator specifying that one is a preamble index for the SBFD slot and the other is a preamble index for the non-SBFD slot.

Then, the base station receives the preamble from the UE (S1104).

In the case of CFRA, the base station recognizes the UE using the preamble index for the slot to which the received RO belongs.

In the case of CBRA, a Random Access-Radio Network Temporary Identifier (RA- RNTI) is calculated using the preamble index for the resource to which the received RO belongs, and a random access response (RAR), including the corresponding preamble index), is transmitted to the UE.

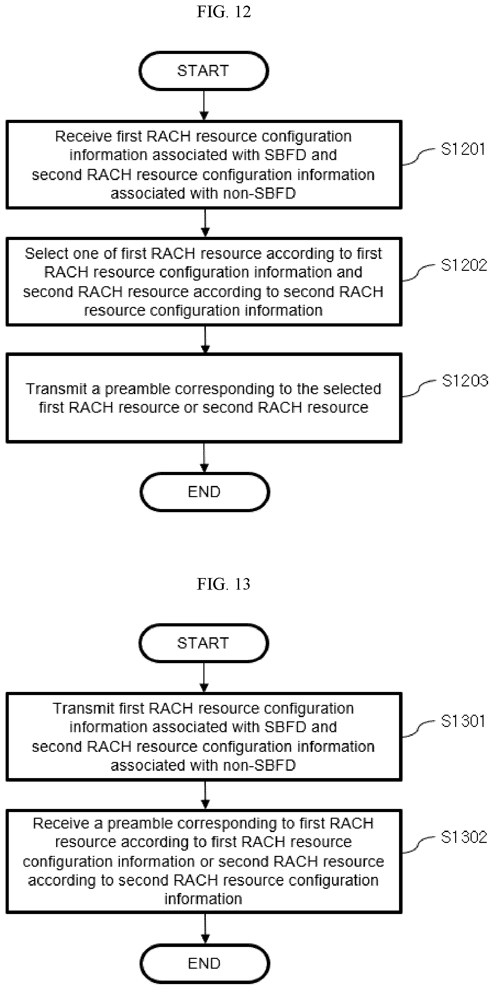

FIG. 12 is a flowchart showing a method of operating a UE according to an embodiment of the present specification.

Referring to FIG. 12, the UE receives first random access channel (RACH) resource configuration information associated with the subband full duplex (SBFD) and second RACH resource configuration information associated with the non-SBFD from the base station (S1201).

The UE selects one of the first RACH resource according to the first RACH resource configuration information and the second RACH resource according to the second RACH resource configuration information (S1202). Then, the UE transmits a preamble corresponding to the selected one RACH resource to the base station (S1203).

Meanwhile, the UE may receive the first RACH resource configuration information through the system information block 1 (SIB1).

In addition, the UE may receive first mapping information between a first RACH occasion of the first RACH resource and a synchronization signal block (SSB), where the first mapping information may be separate from second mapping information between a second RACH occasion of the second RACH resource and the SSB.

Further, the UE may receive an indicator specifying that the first RACH resource is prioritized over the second RACH resource. The UE selects the first RACH resource based on the received indicator and transmits a preamble to the base station, where the transmitted preamble may correspond to the first RACH resource. Here, the indicator may be included in first RACH resource configuration information. In addition, the indicator may be received from the base station at the initiation of the RACH procedure.

FIG. 13 is a flowchart illustrating a method of operating a base station according to an embodiment of the disclosure.

Referring to FIG. 13, the base station transmits first random access channel (RACH) resource configuration information associated with the subband full duplex (SBFD) and second RACH resource configuration information associated with the non-SBFD to the UE (S1301).

Then, the base station receives a preamble corresponding to one of the first RACH resource according to the first RACH resource configuration information and the second RACH resource according to the second RACH resource configuration information from the UE (S1302).

Meanwhile, the base station may transmit the first RACH resource configuration information through the system information block 1 (SIB1).

In addition, the base station may transmit first mapping information between a first RACH occasion of the first RACH resource and a synchronization signal block (SSB), in which the first mapping information may be separated from second mapping information between a second RACH occasion of the second RACH resource and the SSB.

Further, the base station may transmit an indicator specifying that the first RACH resource is prioritized over the second RACH resource. The base station selects the first RACH resource based on the received indicator and receives a preamble from the UE, where the received preamble may correspond to the first RACH resource. Here, the indicator may be included in first RACH resource configuration information. In addition, the indicator may be transmitted to the UE at the initiation of the RACH procedure.

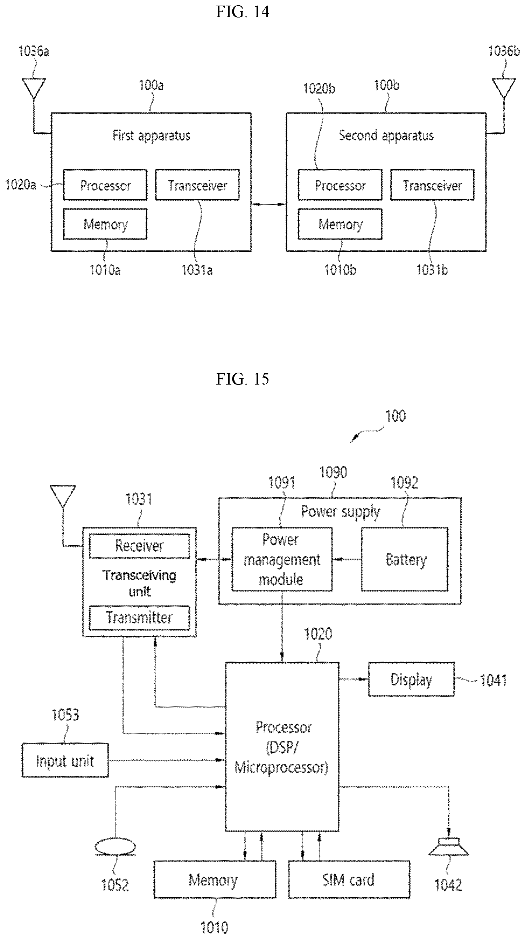

**FIG. 14** **is a block diagram showing apparatuses according to an embodiment of the disclosure.**

Referring to FIG. 14, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 15** **is a block diagram showing a terminal (e.g., user equipment: UE) according to an embodiment of the disclosure.**

In particular, FIG. 15 illustrates the previously described apparatus of FIG. 14 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of the constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

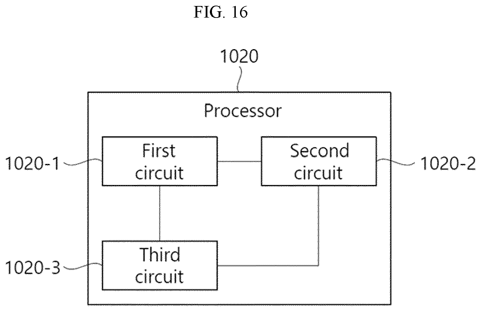

**FIG. 16** **is a block diagram of a processor in accordance with an embodiment.**

Referring to FIG. 16, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

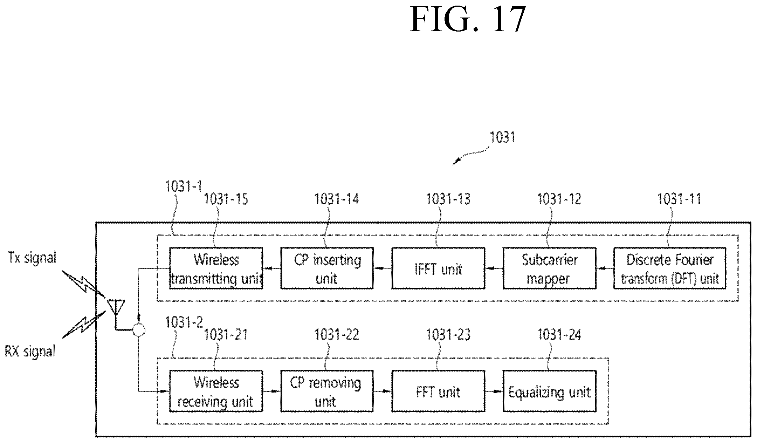

**FIG. 17** **is a detailed block diagram of a transceiver of a first apparatus shown in** **FIG. 14** **or a transceiving unit of an apparatus shown in** **FIG. 15****.**

Referring to FIG. 17, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, a random access procedure is performed in a time division duplex (TDD) through a subband full duplex (SBFD) communication uplink (UL). As a result, physical random access channel (PRACH) transmission is performed earlier than for a UE using only a non-SBFD UL to perform the random access procedure, thereby having an effect on reducing the delay of the random access procedure. Further, the probability of random access collision between the UEs using only the non-SBFD UL is lowered I, which increases a random access success rate and improves overall system performance.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of operating a user equipment (UE) in a wireless communication system, the method comprising:
receiving first random access channel (RACH) resource configuration information associated with a subband full duplex (SBFD) and second RACH resource configuration information associated with non-SBFD;
selecting one of a first RACH resource according to the first RACH resource configuration information and a second RACH resource according to the second RACH resource configuration information; and
transmitting a preamble corresponding to the selected one of the first RACH resource and the second RACH resource.

2. The method of claim 1, wherein the first RACH resource configuration information is received through a system information block 1 (SIB1).

3. The method of claim 1, further comprising receiving first mapping information between a first RACH occasion of the first RACH resource and a synchronization signal block (SSB),
wherein the first mapping information is separate from second mapping information between a second RACH occasion of the second RACH resource and the SSB.

4. The method of claim 1, further comprising receiving an indicator specifying that the first RACH resource is prioritized over the second RACH resource.

5. The method of claim 4, wherein the first RACH resource is selected based on the indicator, and the preamble corresponds to the first RACH resource.

6. The method of claim 4, wherein the indicator is included in the first RACH resource configuration information.

7. The method of claim 4, wherein the indicator is received at initiation of a RACH procedure.

8. A method of operating a base station in a wireless communication system, the method comprising:
transmitting first random access channel (RACH) resource configuration information associated with a subband full duplex (SBFD) and second RACH resource configuration information associated with non-SBFD; and
receiving a preamble corresponding to one of a first RACH resource according to the first RACH resource configuration information and a second RACH resource according to the second RACH resource configuration information.

9. The method of claim 8, wherein the first RACH resource configuration information is transmitted through a system information block 1 (SIB1).

10. The method of claim 8, wherein further comprising transmitting first mapping information between a first RACH occasion of the first RACH resource and a synchronization signal block (SSB),
wherein the first mapping information is separate from second mapping information between a second RACH occasion of the second RACH resource and the SSB.

11. The method of claim 8, further comprising transmitting an indicator specifying that the first RACH resource is prioritized over the second RACH resource.

12. The method of claim 11, wherein the first RACH resource is selected based on the indicator, and the preamble corresponds to the first RACH resource

13. The method of claim 11, wherein the indicator is included in the first RACH resource configuration information.

14. The method of claim 11, wherein the indicator is transmitted at initiation of a RACH procedure.

15. A user equipment (UE) in a wireless communication system comprising:
at least one processor; and
at least one memory configured to store instructions and operably electrically connectable to the at least one processor, wherein operations performed based on the instructions executed by the at least one processor comprise:
receiving first random access channel (RACH) resource configuration information associated with a subband full duplex (SBFD) and second RACH resource configuration information associated with non-SBFD;
selecting one of a first RACH resource according to the first RACH resource configuration information and a second RACH resource according to the second RACH resource configuration information; and
transmitting a preamble corresponding to the selected one of the first RACH resource and the second RACH resource.
